# EUROPEAN PATENT APPLICATION

(11) **EP 4 345 969 A2**
(43) Date of publication of application: **03.04.2024**
(21) Application number: 23196054.3
(22) Date of filing: 07.09.2023
(51) Int. Cl.: H01M 10/052, H01M 10/42, H01M 4/134, H01M 4/02, H01M 4/36

(54) **METHOD OF PREPARING LITHIUM-FRIENDLY COLLOID PAINT, LITHIUM-FRIENDLY COLLOID PAINT AND LITHIUM METAL BATTERY NEGATIVE ELECTRODE CROSS-REFERENCE TO RELATED APPLICATIONS**

(30) Priority: 09.09.2022 CN 202211105994
(71) Applicant: Hon Hai Precision Industry Co., Ltd., New Taipei City (TW); SolidEdge Solution Inc., Hsinchu 300 (TW)
(72) Inventor: CHEN, WEI-CHAO, Hsinchu City 300 (TW); WANG, PIN-HAN, Hsinchu City 300 (TW); LAI, HONG-ZHENG, Hsinchu City 300 (TW); CHANG, TSENG-LUNG, Hsinchu City 300 (TW)
(74) Representative: Zaboliene, Reda

(57) **Abstract**

The present application provides a method of preparing lithium-friendly colloid paint. The method comprises functionalizing a carbon nanotube material to obtain a plurality of carbon nanotubes with functional groups; dispersing the of carbon nanotube material with functional groups in a solution containing nitrogen molecules to from the dispersion liquid to obtain a carbon nanotube precursor; heat-treating the carbon nanotube precursor to obtain a plurality of nitrogen-doped carbon nanotubes; dispersing the plurality of nitrogen-doped carbon nanotubes in an organic solvent, and adding a dispersant obtain a nitrogen-doped carbon nanotube solution precursor; and providing a polymer material colloid and a lithium salt, and uniformly mixing the nitrogen-doped carbon nanotube solution precursor, the lithium salt and the polymer material colloid.

## Description

### CROSS-REFERENCE TO RELATED APPLICATIONS

This application claims all benefits from the Chinese Patent Application No. 202211105994.4, filed on September 9, 2022, in the China National Intellectual Property Administration, the disclosure of which is incorporated herein by reference.

### FIELD

The present invention relates to a method of preparing a lithium-friendly colloid paint, a lithium-friendly colloid paint obtained by the method, and a lithium metal battery negative electrode.

### BACKGROUND

Since the lithium metal anode has a high theoretical gram capacity (3860mAh*g-1) and a low electrochemical potential (-3.04 V), it is considered to be the best choice for anode of lithium-ion secondary batteries. However, due to the high reactivity of lithium metal, it is easy to spontaneously form a heterogeneous and fragile solid electrolyte interface (SEI), and at the same time promote the dendrite growth of the needle-like structure, the ensuing problem is the cracking of the lithium metal structure and the produce continuous side reactions with electrolytes. The continuous side reactions will lead to a decrease in battery cycle and coulombic efficiency, eventually causing battery short circuit and battery combustion. Therefore, how to effectively inhibit the growth of dendrites and prolong the cycle life of the battery has become an important topic in the application and research fields of lithium-ion secondary batteries. In the prior art, methods for stabilizing lithium metal include: first, using liquid electrolyte additives to form a good-quality SEI layer, which not only promotes the conduction of lithium ions but also protects the surface of lithium metal electrodes. However, this method of penetrating additives can only be used in liquid electrolytes, and cannot be effective for all-solid-state lithium-ion secondary batteries. Second, the solid electrolyte of oxide-related materials is directly used as a physical barrier layer to protect the lithium metal surface and inhibit dendrite formation. However, since solid-state electrolytes with high ionic conductivity still need time to mature and process, and the compatibility between oxide electrolytes and lithium metal is very low, this method cannot immediately become the mainstream of the industry.

### BRIEF DESCRIPTION OF THE DRAWINGS

In order to illustrate the technical solutions of the embodiments of the present application more clearly, the accompanying drawings in the embodiments will be briefly introduced below. It should be understood that the following drawings only show some embodiments of the present application, and therefore should not be seen as limiting the scope. For one of ordinary skill in the art, other related drawings can also be obtained from these drawings without any creative work.

Implementations of the present technology will now be described, by way of embodiments, with reference to the attached figures, wherein:
FIG. 1 is a flow chart showing a method of preparing a lithium-friendly colloid paint provided by an embodiment of the present invention.
FIG. 2 is a schematic structural diagram of a lithium metal battery negative electrode provided by an embodiment of the present invention.
FIG. 3 is an XRD spectrum of the lithium-friendly colloid paint provided by the embodiment of the present invention.
FIG. 4 is a scanning electron micrograph of a lithium metal battery negative electrode obtained after coating a lithium metal sheet with the lithium-friendly colloid paint provided in an example of the present invention (the upper right corner is a top-view scanning electron micrograph).
FIG. 5 is charging and discharging curves of the first cycle and the 30th cycle of a coated lithium metal battery composed of the lithium metal battery negative electrode provided by the embodiment of the present invention and the comparison curves with an uncoated lithium metal battery.
FIG. 6 is a comparison curve of a cycle test at 0.5 C between the coated lithium metal battery and the uncoated lithium metal battery provided by an embodiment of the present invention.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

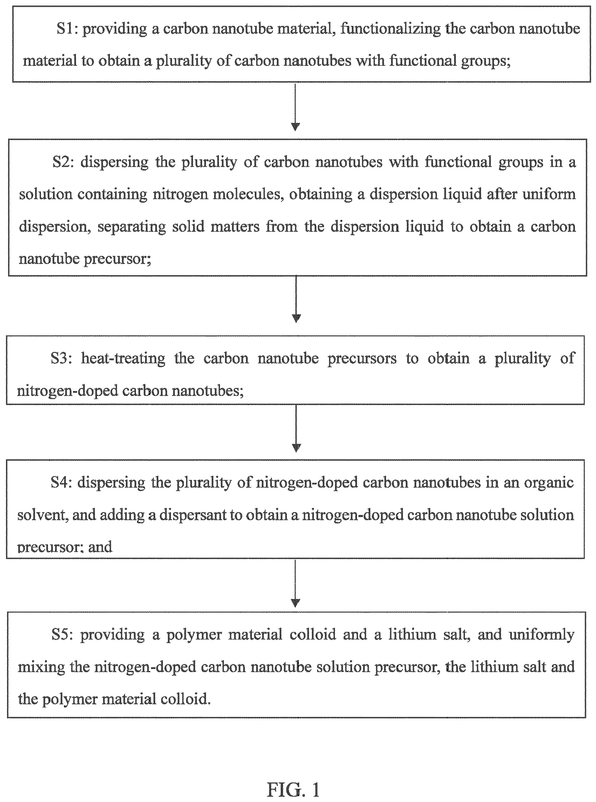

Please refer to FIG. 1, an embodiment of the present invention provides a method of preparing a lithium-friendly colloid paint, it comprises the following steps:
S1: providing a carbon nanotubes material, functionalizing the carbon nanotube material to obtain a plurality of carbon nanotubes with functional groups;
S2: dispersing the plurality of carbon nanotubes with functional groups in a solution containing nitrogen molecules, obtaining a dispersion liquid after uniform dispersion, separating solid matters from the dispersion liquid to obtain a carbon nanotube precursor;
S3: heat-treating the carbon nanotube precursors to obtain a plurality of nitrogen-doped carbon nanotubes;
S4: dispersing the plurality of nitrogen-doped carbon nanotubes in an organic solvent, and adding a dispersant to obtain a nitrogen-doped carbon nanotube solution precursor; and
S5: providing a polymer material colloid and a lithium salt, and uniformly mixing the nitrogen-doped carbon nanotube solution precursor, the lithium salt and the polymer material colloid.

Hereinafter, each step of the method of preparing a lithium-friendly colloid paint, provided by the embodiment of the present invention will be described in detail.

In step S1, the carbon nanotube material comprises a plurality of carbon nanotubes. The carbon nanotubes are double-walled or multi-walled carbon nanotubes. Preferably, the carbon nanotubes are multi-walled carbon nanotubes. Lengths of the carbon nanotubes are not limited. In this embodiment, multi-walled carbon nanotubes are selected, and lengths of the multi-walled carbon nanotubes are between 5 µm and 15 µm. A chemical modification method is used to introduce a functional group on the surface of the carbon nanotube, and the functional group can be at least one of a carboxyl group and a hydroxyl group. In this embodiment, carboxyl groups are introduced onto the surfaces of carbon nanotubes to form carboxylated multi-walled carbon nanotubes.

In step S2, the solution containing nitrogen molecules can be ammonia water or melamine solution. In this embodiment, appropriate carboxylated carbon nanotubes are dispersed in an ammonia water, treated in an ultrasonic water bath to obtain a solvent and a solid material, and then the solvent is separated from the solid material by a vacuum filtration method. A mass concentration of the ammonia water is in a range from 10 wt% to 30 wt%. A mass ratio between the carboxylated carbon nanotubes and the ammonia water is 1-5 wt%. The step of the ultrasonic water bath treatment is to disperse the carbon nanotubes in a nitrogen-containing molecule solution, then stirring them in an ultrasonic water bath for about 1-2 hours to obtain a mixed solution. Then, the mixed solution is vacuum filtered with a filter paper whose pores diameters are smaller than length of the carbon nanotubes, and then the carbon nanotubes precursor attached by the ammonia water are obtained.

In step S3, the carbon nanotube precursor attached by the ammonia water obtained after solid-liquid separation are subjected to a specific-temperature heat treatment in an inert environment to obtain nitrogen-doped carbon nanotubes after a period of time. A temperature of the specific treatment is above 1000°C, and a time of the heat treatment is in a range of 10 to 1200 minutes. During the above-mentioned nitrogen doping process, the carbon hexacyclic rings in the carbon nanotube are opened, and nitrogen atoms are introduced, thereby forming pyridine structures. The pyridine structures are highly lithium-friendly. Dispersing the highly lithium-friendly nitrogen-doped carbon nanotubes in the polymer composite colloid rich in lithium salt can greatly increase the concentration of lithium ions in the colloid.

In step S4, nitrogen-doped carbon nanotubes are dissolved in the organic solvent in an appropriate proportion, and at the same time, an appropriate proportion of dispersant is added, and after ultrasonically dispersed, a highly lithium-friendly nitrogen-doped carbon nanotube solution precursor can be obtained. The organic solvent comprises at least one selected from the group consisting of N-methylpyrrolidone (N-Methyl-2-pyrrolidone, NMP), dimethylformamide (DMF), dimethylacetamide (DMAc), diethyl carbonate (DEC), propylene carbonate (PC), tetrahydrofuran (THF) and dimethyl sulfoxide (DMSO). The dispersant comprises at least one selected from the group consisting of polyvinylpyrrolidone (PVP), polyacrylonitrile (PAN) and polysulfone (PES). In this embodiment, NMP is used as the organic solvent, and PVP is used as the dispersant, and PVP can be used as a dispersant to uniformly disperse carbon nanotubes in NMP. In this embodiment, the nitrogen-doped carbon nanotubes are mixed with polyvinylpyrrolidone (PVP K30) at a weight ratio of 2:1 to obtain a mixture, which is dissolved with NMP as a solvent to obtain a mixed solution. A weight percentage of the mixture of nanotubes and PVP to the weight of the whole mixed solution is 10-20 wt%. After uniform dissolution, high-energy ultrasonic waves are used for ultrasonic dispersion. The total cumulative energy of ultrasonic waves is greater than 10,000 joules. Finally, a uniformly dispersed nitrogen-doped carbon nanotube solution precursor is obtained.

In step S5, the polymer material colloid is used to increase the dispersion of highly lithium-friendly nitrogen-doped carbon nanotubes, and at the same time, when the nitrogen-doped carbon nanotubes are dispersed, they fill in gaps in a network formed by the carbon nanotubes to reduce the occurrence of carbon nanotube agglomeration, thereby avoiding this phenomenon of carbon nanotubes accumulation or precipitation. At the same time, the polymer material colloid has a function of adjusting the viscosity of the finally obtained lithium-friendly colloid paint. The polymer material colloid includes a first polymer material and a second polymer material. The first polymer material comprises at least one selected from the group consisting of polyvinylidene fluoride, polyethylene oxide and polyvinyl alcohol. The first polymer material can be at least one of polyvinylidene fluoride, polyethylene oxide and polyvinyl alcohol. The second polymer material comprises at least one selected from the group consisting of poly(methyl methacrylate), polypyrrole and poly(2-ethyl-2-oxazoline). The second polymer material can be at least one of poly(methyl methacrylate), polypyrrole and poly(2-ethyl-2-oxazoline). In this embodiment, polyvinylidene fluoride is selected as the first polymer material, and poly(methyl methacrylate) is selected as the second polymer material. In the polymer material colloid, a mass ratio of polyvinylidene fluoride to poly(methyl methacrylate) is in a range of 5 or more. In some embodiments, the mass ratio of polyvinylidene fluoride to poly(methyl methacrylate) is about 7.

The effect of adding lithium salt is to increase the amount of lithium ions in the polymer colloid, thereby increasing the concentration of lithium ions in the finally obtained lithium-friendly colloid paint, and assisting in increasing the conductivity of lithium ions in the lithium-friendly colloidal coating. The lithium salts comprises at least one selected from the group consisting of lithium bis (trifluoromethanesulfonyl) imide (LiTFSI), lithium hexafluorophosphate (LiPF6), lithium bis(fluorosulfonyl)imide, LiFSI), Lithium Tetrafluoroborate (LiBF4), Lithium bis(oxalate)borate, LiBOB and Lithium difluoroborate (oxalato)borate, LiDFOB). The lithium salt can be at least one of lithium bis (trifluoromethylsulfonyl)imide (Lithium bis (trifluoromethanesulfonyl)imide, LiTFSI), lithium hexafluorophosphate (Lithium hexafluorophosphate, LiPF6), lithium bis(fluorosulfonyl) imide, LiFSI), Lithium Tetrafluoroborate (LiBF4), Lithium bis(oxalate)borate, LiBOB and Lithium difluoro(oxalato)borate, LiDFOB).

Embodiments of the present invention further provide a lithium-friendly colloid paint, which is obtained by the above-mentioned method. The lithium-friendly colloid paint includes a plurality of nitrogen-doped carbon nanotubes, an organic solvent, a polymer material colloid and a lithium salt. The organic solvent, the polymer material colloid and lithium salt are uniformly mixed to form a mixed colloid. The plurality of nitrogen-doped carbon nanotubes are uniformly dispersed in the mixed colloid. The carbon nanotubes are double-walled carbon nanotubes or multi-walled carbon nanotubes. The organic solvent can be an organic solvent containing a pyrrole structure.

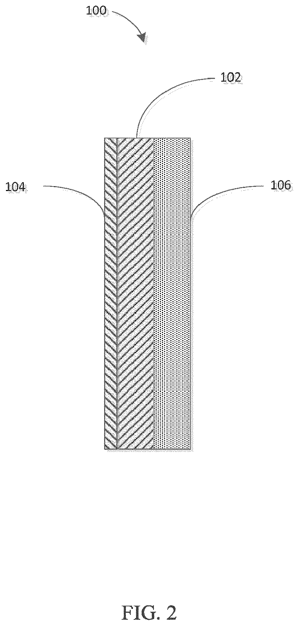

Embodiments of the present invention further provide a lithium metal battery negative electrode, which includes a lithium metal sheet and a lithium-friendly coating layer. The lithium-friendly coating layer is obtained by coating the above-mentioned lithium-friendly colloid paint on a surface of the lithium metal sheet. Referring to FIG. 2, the lithium metal battery negative electrode 100 includes a lithium metal sheet 102 and a lithium-friendly coating layer 104. The lithium-friendly coating layer 104 is located on a surface of the lithium metal sheet 102. The lithium metal battery negative electrode 100 can further include a current collector 106, and the lithium metal sheet 102 is located between the lithium-friendly coating layer 104 and the current collector 106. The current collector 106, the lithium metal sheet 102 and the lithium-friendly coating layer 104 are sequentially stacked to form a sandwich structure. A thickness of the lithium-friendly coating layer 104 can be in a range from 10 microns to 50 microns. When the lithium metal battery negative electrode 100 is in use, the lithium-friendly coating layer 104 is in direct contact with the electrolyte or electrolyte in a battery. Lithium-friendly coating layer 104 is located between electrolyte/electrolyte and lithium metal sheet 102.

The following specific embodiments and test results will illustrate advantages of the method of preparing lithium-friendly colloid paint, the lithium-friendly colloid paint and the lithium metal battery negative electrode obtained by using the lithium-friendly colloid paint provided by the present invention.

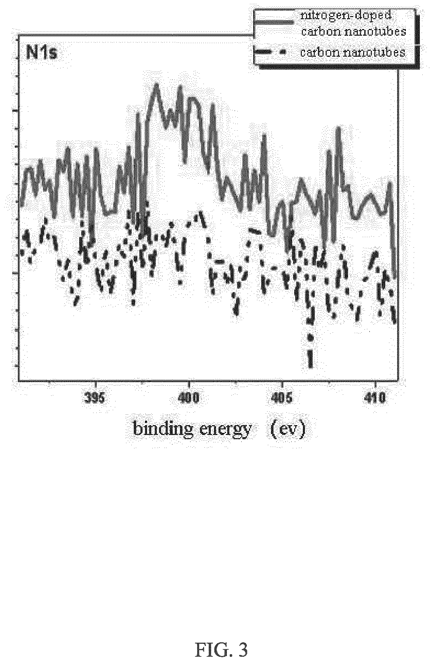

In one embodiment, the method of preparing lithium-friendly colloid paint specifically includes:
Step 1: providing carbon nanotubes raw material, carboxyl groups are introduced onto the surfaces of carbon nanotubes to form carboxylated multi-walled carbon nanotubes.
Step 2: Mixing carboxylated multi-walled carbon nanotubes having a length of 5 µm to 15 µm in a mass percentage of about 1-5 wt % with ammonia water having a concentration of about 20 wt % to form a mixed solution. After the mixed solution is vibrated in an ultrasonic water bath for about 1-2 hours, the mixed solution is vacuum filtered through a filter paper with a pore size smaller than the length of the multi-walled carbon nanotubes to obtain carbon nanotubes precursor attached with ammonia water.
Step 3: Under an inert atmosphere, heat-treating the above-mentioned carbon nanotubes precursor at a temperature exceeding 1000 Celsius degrees for 10-1200 minutes, to obtain nitrogen-doped carbon nanotubes. The nitrogen-doped carbon nanotubes give a peak at a binding energy of about 398.6 eV. As shown in FIG. 3, the nitrogen-doped carbon nanotubes obtained above were subjected to X-ray photoelectron spectroscopy analysis, and the formation of nitrogen-doped carbon nanotubes containing a pyridine structure could be clearly observed.
Step 4: Mixing the above-mentioned nitrogen-doped carbon nanotubes with polyvinylpyrrolidone (PVP K30) at a mass ratio of 2:1, and then dissolving the two at a weight percentage of about 10-20 wt% with NMP as a solvent. After uniform dissolution, high-energy ultrasonic waves are applied to disperse with a total cumulative energy greater than 10,000 joules, thereby obtaining a uniformly dispersed nitrogen-doped carbon nanotube solution.
Step 5, The composite colloidal polymer material in this embodiment is PVDF (Polyvinylidene, polyvinylidene fluoride) and PMMA (poly (methyl methacrylate, poly(methyl methacrylate) compound. The composite colloidal polymer and the nitrogen-doped carbon nanotube solution is mixed at a mass ratio of 7:1 to form a slurry, wherein, in the slurry, the solid weight accounts for the entire slurry 10%∼20% of weight. A weight percentage of the nitrogen-doped carbon nanotubes in the slurry is in a range from 5% to 10%. The lithium salt in this embodiment uses is LiTFSI (lithium bis(trifluoromethanesulfonyl)imide, two trifluoromethanesulfonylimide lithium), and lithium salt is used for providing a large amount of lithium ions, makes colloidal lithium ion conductivity increases. A weight percentage of the lithium salt is between 5% and 15% in the slurry. After the polymer material colloid, lithium salt and nitrogen-doped carbon nanotube solution are mixed uniformly, the lithium-friendly colloid paint is obtained.

A lithium-friendly coating layer is obtained by coating the lithium-friendly colloid paint. The highly lithium-friendly nitrogen-doped carbon nanotubes are mixed with ion-conducting units in the lithium salt material of the colloid, and the high concentration of lithium ions in the colloid promotes the conduction of lithium ions and stabilizes the speed and concentration distribution of lithium ions when migrating at the negative electrode interface. At the same time, the lithium-friendly coating layer of the lithium metal battery can inhibit the side reaction between the lithium metal and other anions in the electrolyte, thereby improving the cycle performance of the battery.

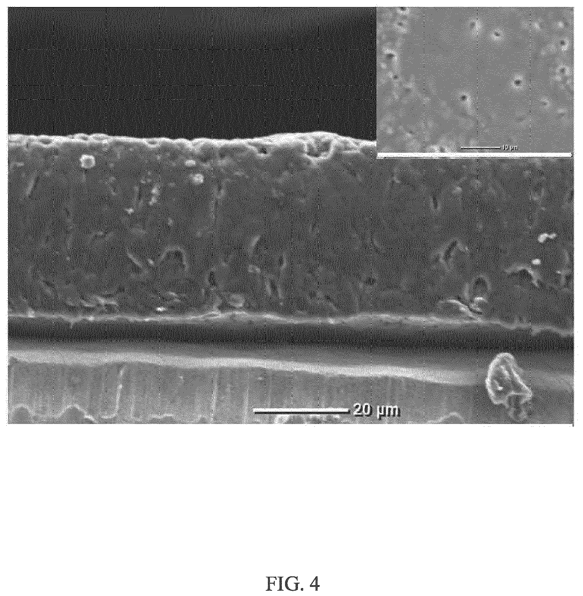

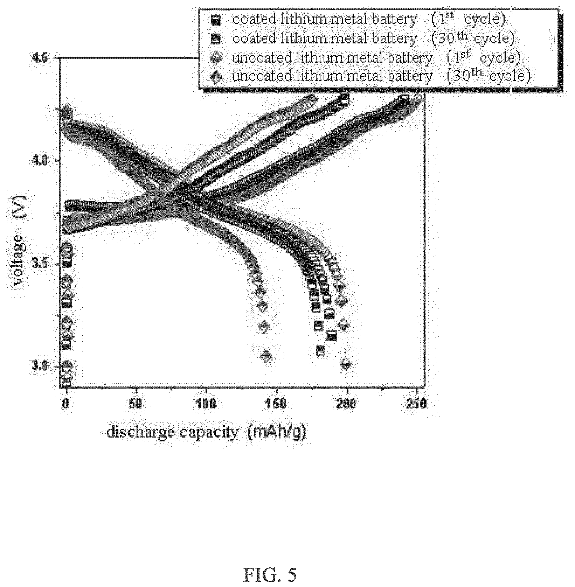

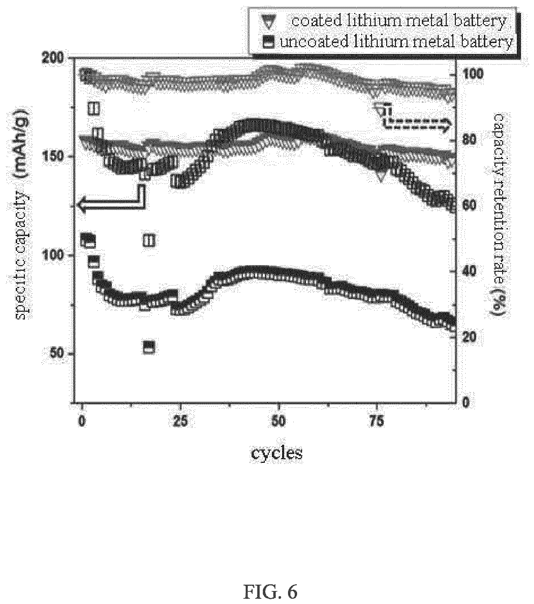

Please refer to FIG. 4, coating the lithium-friendly colloid paint provided by the embodiment of the present invention on a lithium metal sheet to form a lithium-friendly coating layer with a thickness about 30 microns to obtain a lithium metal negative electrode, A high-nickel lithium nickel cobalt manganese ternary (LiNi1-x-yCoxMnyO2) material is used as a positive electrode, wherein the values of X and Y are 0.05≦X≦0.2 and 0.05≦Y≦0.2. The negative electrode and the positive electrode are used to form a lithium metal battery, which is called a coated lithium metal battery. In an comparative test, an uncoated lithium metal battery is provided, in which a lithium metal sheet without coating was used as the negative electrode, and other conditions and parameters were the same as the above-mentioned nitrogen-doped carbon nanotube-coated lithium metal battery. Nitrogen-doped carbon nanotube-coated lithium metal battery and uncoated lithium metal battery use battery separators (Celgard 2320), and the positive and negative electrodes including separators are soaked in electrolyte to make button cells for electrochemical property verification. Please refer to FIG. 5 for verification results. If the lithium metal negative electrode does not have this coating layer, the specific capacity of the first cycle of the battery can reach about 200 mAh per gram under the condition of 0.1C, and the Coulombic efficiency is about 80%. However, after returning to 0.1C after 30 cycles at different charge and discharge rates, the discharge specific capacity can only reach 140 mAh/g, and the Coulombic efficiency can only reach about 90%. This behavior indicates that a large number of lithium ions gradually form an SEI layer with the positive electrode, negative electrode, and electrolyte during the charge and discharge behavior, and at the same time cause a large amount of lithium ions loss. However, in the absence of a lithium-friendly coating layer, until the 30th charge and discharge behavior, the loss of lithium ions still cannot be effectively suppressed. With the lithium metal negative electrode protected by the lithium-friendly coating layer, the battery's first cycle discharge specific capacity can reach about 190 mAh per gram under the condition of 0.1C, and the Coulombic efficiency is about 80%. After returning to 0.1C after 30 cycles at different charge and discharge rates, the discharge specific capacity can still reach close to 190 mAh per gram, and the Coulombic efficiency has reached about 99%, which proves that its internal lithium ions loss has gradually stabilized. After charging and discharging tests at different rates, the two batteries were subjected to a cycle test of about 95 cycles at 0.5C, and the test results are shown in FIG. 6. It can be found that the discharge specific capacity of the lithium metal negative electrode without this coating layer is very unstable, the capacity retention rate is from 100% in the first cycle to about 60% after 95 cycles, and the overall discharge capacity rate is very unstable, which may be Lithium dendrites or dead lithium are generated on the interface due to the continuous negative reaction between the lithium metal negative electrode and the electrolyte. However, the lithium metal negative electrode protected by the lithium-friendly coating layer can maintain a capacity retention rate of more than 95% from the first cycle to the 95th cycle. Therefore, it can be confirmed that this lithium-friendly colloid paint, because of its highly lithium-friendly pyridine structure, produces a high concentration of lithium ions inside the colloid, thereby controlling and homogenizing the deposition and stripping behaviors of lithium ions during charging and discharging on the lithium metal negative electrode. When charging, a large amount of lithium ions are quickly reduced by this high-concentration lithium ion interface layer and deposited on the lithium metal negative electrode, and the lithium ions generated by the positive electrode will also uniformly pass through this interface because of the high lithium affinity of the interface layer. During charging process, the coating layer diffuses to the lithium metal negative electrode to form a dynamic balance; and during discharging process, lithium ions will be ejected by the high lithium ion concentration interface layer, and will be re-reduced by the lithium metal negative electrode to maintain lithium ions internal balance in the coating layer.

The method of preparing a lithium-friendly colloid paint provided by the present invention adopts a simple, economical and rapid nitrogen atom-doped carbon nanotube material process, and obtains a precursor after uniformly mixing functionalized carbon nanotubes with a solvent containing ammonia molecules, then heat-treat the precursor at a temperature above 1000 Celsius degrees under an inert atmosphere to obtain carbon nanotubes doped with nitrogen atoms. The doping of nitrogen atoms on the surface of carbon nanotubes will produce a highly lithium-friendly pyridine structure, and the highly lithium-friendly nitrogen atom-doped carbon nanotubes are uniformly dispersed in the polymer composite colloid rich in lithium salts, so that the concentration of lithium ions is high. Therefore, the concentration of lithium ions in the lithium-friendly colloidal coating obtained by this method is relatively large, and the lithium-friendly colloid paint can greatly homogenize the lithium ions deposition and stripping on the lithium metal negative electrode; at the same time, inhibit the side reactions between lithium metal and other anions in the electrolyte, thereby greatly reducing the generation of lithium dendrites and improving the battery cycle.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims.

Depending on the embodiment, certain of the steps of methods described may be removed, others may be added, and the sequence of steps may be altered. The description and the claims drawn to a method may comprise some indication in reference to certain steps. However, the indication used is only to be viewed for identification purposes and not as a suggestion for ordering the steps.

## Claims

1. A method of preparing lithium-friendly colloid paint, comprising:
S 1: providing a carbon nanotube material, functionalizing the carbon nanotube material to obtain a plurality of carbon nanotubes with functional groups;
S2: dispersing the plurality of carbon nanotubes with functional groups in a solution containing nitrogen molecules, obtaining a dispersion liquid after uniform dispersion, separating solid matters from the dispersion liquid to obtain a carbon nanotube precursor;
S3: heat-treating the carbon nanotube precursor to obtain a plurality of nitrogen-doped carbon nanotubes;
S4: dispersing the plurality of nitrogen-doped carbon nanotubes in an organic solvent, and adding a dispersant to obtain a nitrogen-doped carbon nanotube solution precursor; and
S5: providing a polymer material colloid and a lithium salt, and uniformly mixing the nitrogen-doped carbon nanotube solution precursor, the lithium salt and the polymer material colloid.

2. The method of claim 1, wherein the carbon nanotube material is double-walled or multi-walled carbon nanotubes.

3. The method of claim 1, wherein, in step S1, the functional groups on the surface of the plurality of carbon nanotubes are formed by a chemical modification method.

4. The method of claim 1, wherein in step S2, the plurality of carbon nanotubes with functional groups are dispersed an ammonia water, and a mass ratio between the plurality of carbon nanotubes and the ammonia water is in a range from 1 wt% to 5 wt%.

5. The method of claim 1, wherein, in step S3, a process of heat-treating the carbon nanotube precursors comprises: the carbon nanotube precursors are heat-treated at a specific temperature under an inert environment for about 10 to 1200 minutes; wherein the specific temperature is above 1000° C.

6. The method of claim 1, wherein in step S4, the organic solvent comprises at least one selected from the group consisting of N-methylpyrrolidone (NMP), methylformamide (DMF), dimethylacetamide (DMAc), diethyl carbonate (DEC), propylene carbonate (PC), tetrahydrofuran (THF) and dimethyl sulfoxide (DMSO).

7. The method of claim 1, wherein in step S5, the polymer material colloid comprises a first polymer material and a second polymer material, and the first polymer material comprises at least one selected from the group consisting of polyvinylidene fluoride, polyethylene oxide and polyvinyl alcohol, and the second polymer material comprises at least one selected from the group consisting of poly(methyl methacrylate), polypyrrole and poly(2 -ethyl-2-oxazoline).

8. The method of claim 7, wherein in step S5, the first polymer material is polyvinylidene fluoride and the second polymer material is poly(methyl methacrylate); wherein a mass ratio of polyvinylidene fluoride to poly(methyl methacrylate) is in a range of 5 to 7.

9. A lithium-friendly colloid paint, comprising:
a plurality of nitrogen-doped carbon nanotubes, an organic solvent, a polymer material colloid and a lithium salt, wherein the organic solvent, the polymer material colloid and the lithium salt are uniformly mixed to form a mixed colloid, the plurality of nitrogen-doped carbon nanotubes are uniformly dispersed in the mixed colloid.

10. The lithium-friendly colloid paint of claim 9, the organic solvent comprises a pyrrole structure.

11. The lithium-friendly colloid paint of claim 9, a weight percentage of the plurality of nitrogen-doped carbon nanotubes in the lithium-friendly colloid paint is in a range from 5% to 10%.

12. A lithium metal battery negative electrode, comprising:
a lithium metal sheet and a lithium-friendly coating layer, the lithium-friendly coating layer is located on a surface of the lithium metal sheet, the lithium-friendly coating layer comprising a plurality of nitrogen-doped carbon nanotubes, an organic solvent, a polymer material colloid and a lithium salt, wherein the organic solvent, the polymer material colloid and lithium salt are uniformly mixed to form a mixed colloid, the plurality of nitrogen-doped carbon nanotubes are uniformly dispersed in the mixed colloid.

13. The lithium metal battery negative electrode of claim 12, wherein a thickness of the lithium-friendly coating layer is in a range from 10 microns to 50 microns.

14. The lithium metal battery negative electrode of claim 12, wherein the lithium-friendly coating layer is in direct contact with an electrolyte in a battery.

15. The lithium metal battery negative electrode of claim 14, wherein the Lithium-friendly coating layer is located between the electrolyte and the lithium metal sheet.
